# EUROPEAN PATENT APPLICATION

(11) **EP 2 690 227 A2**
(43) Date of publication of application: **29.01.2014**
(21) Application number: 13492001.6
(22) Date of filing: 17.07.2013
(51) Int. Cl.: E03B 9/04, E03B 9/08, E03B 9/14

(54) **Fire hydrant**

(30) Priority: 23.07.2012 RS P20120305
(71) Applicant: "Tecoop-Eng" D.O.O. Pancevo, 26000 Pancevo (RS)
(72) Inventor: Radeka, Spasoje, 26000 Pancevo (RS)

(57) **Abstract**

The invention refers to improvement of construction at overground and underground Fire Hydrants.

Solutions are shown:
- how to dislocate the screw part of the gate valve and the bearing of axial forces of the gate valve, out of water current,
- bearings of axial forces of the gate valve by rolling bearings,
- activation of Hydrant without additional tools, by direct hands acting on hydrant cap,
- mechanical blockade against an unauthorized activating,
- mechanical limitations of the position of gate valve when the water flow is biggest,
- problem of the level of water lagging behind and sur-pressure in the hydrant body, when the hydrant is closed,
- drainage valve which is activated by the effect of water pressure, being independent of any part of the gate valve.

## Description

### Field of Engineering the invention refers to

The Invention refers to civil engineering generally, actually to the field of methods and installations for water.
Marks by MKP are EO3B/04; EO3B/08; E03B/14

### Technical problem

The aim of this invention is to get a Fire Hydrant:
**1.** Where resistance of gate valve activating, will be as smallest as possible in the screwed part of a gate valve and in axial forces supports,
**2.** Where activating will be possible by direct acting on some part of a hydrant, but not being a wheel,
**3.** Which will have the possibility of a mechanical blockade against an unauthorized activating, by taking-up of a special bolt,
**4.** Which will have mechanical stop beads; the position when the hydrant is open to the utmost, and the position when the insulating valve is closed,
**5.** Where the gasket replacing of the main valve will be possible on the spot, without dismanling of a hydrant body, or without the case that overground part of a hydrant body is separable from the underground part,
**6.** Which will have a drainage valve inside itself independent from hydrant gate valve, and which will be able to be replaced without dismanling of a hydrant body,
**7.** Which will have a control valve inside itself, through which it will be possible to do a control of a water level height, lagging behind in hydrant body, and by which it will be possible to check whether the hydrant body is under sur-pressure, when the hydrant is closed.

### State of Technics

**1.** Activating of these hydrants is, as a rule, by a gate valve with a screw mechanism. Most often and biggest imperfections of previous solutions are those: the screw of a gate valve is in a water current, instead of being separated from water current, and bearings of axial forces supports are sliding instead of being rolling.
**2.** The problem that hydrant activating can be done by direct operation on hydrant was solved this way: the wheel was set on the top of a hydrant, of a usual looks as with other valves. The imperfections of this solution are: the wheel which is used only for hydrant activating and complexity of an additional device by which blockade against an unauthorized activating could be done.
**3.** Problem of prevention from an unauthorized activating was solved by producing special keys (tools) which are not on a hydrant all the time, but are set on it in the moment of the need to activate a hydrant. Biggest imperfections of this solution are storing, putting and removing of the key by which activating of a hydrant is done.
**4.** Problem of a mechanical limitation of the gate valve position was not being solved most often, and if it was, it was done in complex ways.
**5.** Caulking of these hydrants is, as a rule, done at the bottom of the underground part of a hydrant. To enable replacing of the main valve gasket without digging up the ground, the problem was being solved this way: the hydrant body was produced in two separable parts. By separation and raising of an overground part of a hydrant body, the main valve gasket was removed too, by which its replacing was enabled. Imperfections of such solution are raising the price of hydrant body production and more difficult gasket replacing because of heavy weight of parts which are to be raised.
**6.** Drainage problem was most often being solved this way: an opening was left in the hydrant body, which is with a part of a gate valve closed while hydrant is working, and is open when hydrant is closed. Imperfection of this solution is impossibility of eliminating of the breakdown until the hydrant is dismantled.
**7.** Problem of control, height of the level of water lagging behind, existence of sur-pressure in the hydrant body, when the hydrant is closed, up to now, was not being particularly solved.

### Exposition of the essence of invention

**1.** Problem for resistances of gate valve activating to be as small as possible, is solved this way: the screwed part of a gate valve is dislocated out of water current, and can be permanently lubricated ; and bearings of axial forces supports are rolling ones, dislocated out of water current, and can be permanently lubricated. Advantages of the invention are: easier and faster hydrant activating, higher work reliability, lower maintenance expenses.
**2.** Problem of a direct hydrant activating, but not being a wheel, is solved this way: the gate valve nut, which is on the top of the hydrant, is capped, the cap being with four uniformly arranged longitudinal stalks on the sheathing of the biggest cylindrical part. By hands acting on the cap stalks it comes to turning of the cap, and hydrant activating with it. Advantages of the invention are: two cap functions ; gate valve nut protection and hydrant activating.
**3.** Problem of a blockade against an unauthorized activating is solved this way: a special bolt is set in the cap body, which by twisting leans on a fixed hydrant part, by which turning of the cap is mechanically prevented, preventing hydrant activating with it, too. Advantage of the invention is a simple possibility of preventing of an unauthorized hydrant activating.
**4.** Problem of limitation of position when the hydrant is open to the utmost, and when the insulating valve is closed, is solved by the construction of the gate valve nut. During regular work, gate valve spindle is risen until the front of the upper end leans on the cover, which from the upper side closes the gate valve nut; in that position hydrant is open to the utmost.
   When closing of the insulating valve is wanted, then the cover is unscrewed which from the upper side closes the gate valve nut; by this, the possibility is created for the spindle to rise as long as by the non-screwed part it leans on the lower inception of the screw thread in the gate valve nut. In that position insulating valve is closed.
   The advantage is easier use of hydrant. Operator need not count the rotations of the gate valve spindle.
**5.** Problem of possibility that gasket replacing of the main valve can be done without dismanling of a hydrant body, or without the case that overground part of a hydrant body is separable from the underground part, is solved this way: on the upper end of a hydrant body the hole is set, of size enough for the gasket of the main valve to be pulled out through it. Advantage of the invention is : lower price and shorter time of this gasket replacing.
**6.** Problem of evacuation of water lagging behind in the hydrant body is solved by a special valve, twisted externally in the hydrant body. The valve basically consists of the body, ram and spring. Closing of the valve occurs when the power of water pressure, which acts on the ram, exceeds the power in the spring on which the ram is leant. Opening of the valve occurs when the power of water pressure, which acts on the ram, becomes less than the power in the spring on which the ram is leant.
   When the valve is open, water pours out of the hydrant. When the valve is closed, pouring of water out of hydrant body is prevented.
   Advantage of the invention is possibility that valve replacing or repair can be done without disman ling of a hydrant body.
**7.** Problem how to do a control of the height of water level lagging behind and existence of sur-pressure in hydrant body, when hydrant is closed, is solved this way: control valve is set on the top of a hydrant body.
   The valve consists of a body and a ram, which are connected with a screw thread bond. There are central and lateral opening in the body. By pulling the ram out of the valve body, the central opening in the body is released, through which a small plastic pipe can be drawn in the hydrant body, and that is the way the water level lagging behind can be checked. By partial pulling of the ram out of the valve body, the lateral opening is released, and through it water from the hydrant body can be flowed out, in case water in the hydrant body is under sur-pressure.
   Advantage of the invention is that it enables an easy way of establishing the water level height and possible presence of sur-pressure in the hydrant body, in time when the hydrant is closed.

### Short description of project pictures

Picture **1** shows a longitudinal section of an overground fire hydrant, in open position, where all patent solutions are applied.
Picture **1.1** shows a detail from picture 1, patent solution "cap assembly"
Picture **1.2** shows a detail from picture 1, patent solution "gate valve nut assembly"
Picture **1.3** shows a detail from picture 1, patent solution "control valve "
Picture **1.4** shows a detail from picture 1, patent solution "drainage valve "
Picture **2** shows a longitudinal section of an underground fire hydrant, in open position, where some patent solutions are applied.

### Detailed description of the invention

Fire hydrant at picture 1 consists of: entrance/input assembly 1.1 ÷ 1.4, body 2.1 ÷ 2.3, joint screws 3.1 ÷ 3.2, drainage valve 4.1 ÷ 4.6, gate valve spindle assembly 5.1 ÷ 5.5, gate valve nut assembly 6.1 ÷ 6.7, cover 7, cap assembly 8.1 ÷ 8.3, control valve 9.1 ÷ 9.2 and exit joints 10.

Entrance assembly 1.1 ÷ 1.4 consists of: entrance housing 1.1, gate valve seat 1.2, insulating valve gasket 1.3 and direction indicator 1.4. Entrance/input assembly is bonded for the drainage housing 2.1 by joint screws 3.1

Body 2.1 ÷ 2.3 consists of: drainage housing 2.1, pipe 2.2 and exit housing 2.3.

Drainage valve 4.1 - 4.6 consists of: body 4.1, ram 4.2, spring 4.3, bearing 4.4, mushroom 4.5 and compression gland 4.6.

In the ram 4.2, near mushroom 4.5, two uniformly arranged holes are drilled, which are tilted in relation to longitudinal ram axis 4.2 and are connected with a central hole drilled in the longitudinal ram axis 4.2.

Mushroom 4.5 is with a screwed joint connected for ram 4.2.

Bearing 4.4 is is with a screwed joint connected with body 4.1

At the inception of body 4.1, towards mushroom 4.5 a thread is incised, by which a drainage valve is twisted on the outer side into the drainage housing 2.1.

Drainage valve is open when the mushroom 4.5 is farthest to the utmost from body 4.1, and it is closed when the mushroom 4.5 is leant on body 4.1.

In the position when the drainage valve is closed, contact between mushroom 4.5 and body 4.1 is achieved over conical surface, and caulking is done by compression gland 4.6.

Drainage valve is open because of the effect of spring force 4.3 on the ram 4.2, and is closed because of the effect of water pressure from the drainage housing 2.1 on the front of the mushroom 4.5.

End of closing as well as start of opening of drainage valve is done when the water pressure is (0.6 - 0.8) bar. The force in spring 4.3 is possible to adjust by moving of the bearing 4.4.

Gate valve spindle assembly 5.1 ÷ 5.5 consists of: gate valve spindle 5.1, wedge 5.2, compression weight 5.3, gasket of the main valve 5.4 and gasket support 5.5. On the top part of the gate valve spindle 5.1 a thread is incised.

Screw thread part of the gate valve spindle 5.1 is of a smaller diameter than the basic, non-screwed part.

Gate valve spindle 5.1 is in the upper part partially drawn into the gate valve nut assembly 6.1 ÷ 6.7 this way: with its screwed part it is in a permanent link with a screw thread in the gate valve nut 6.1, and with its non-screwed part it is in a permanent link with compression glands 6.6.

Compression weight 5.3 is crushed with wedges into two longitudinal keyways, which are in the drainage housing 2.1, by which turning is prevented, and longitudinal moving of a gate valve spindle 5.1 is enabled, in time when turning of gate valve nut 6.1.

Hydrant activation is done by turning of the gate valve nut 6.1, while spindle 5.1 is moving upward or downward, depending on direction of turning of the gate valve nut 6.1.

Gate valve nut assembly 6.1 ÷ 6.7 consists of: valve nut 6.1, upper support 6.2, upper axial rolling bearing 6.3, bottom axial rolling bearing 6.4, bottom support 6.5, compression glands 6.6 and bolts 6.7.

Valve nut assembly 6.1 ÷ 6.7 is with bolts 3.2. tied for exit housing 2.3.

Screw thread part of the gate valve nut 6.1 is in its upper half.

Opening in the gate valve nut 6.1, under the screw thread part is of a diameter a bit bigger than the diameter of the non-screwed part of the gate valve spindle 5.1, which enables that the non-screwed part of the spindle 5.1 can be drawn in up to lower inception of the screw thread part in the gate valve nut 6.1.

By bolts 6.7 all parts of gate valve nut assembly 6.1 ÷ 6.7 are connected in one separable whole.

This Fire Hydrant, besides the main valve gasket 5.4 has also got the insulation valve gasket 1.3.

The main valve gasket 5.4 is a working one, as it enables or prevents water pouring out of the fire hydrant during a regular use. The insulation valve gasket 1.3 is subsidiary, as it prevents water pouring out of the fire hydrant while replacing of the main valve gasket 5.4 is being done.

The main valve gasket 5.4 is tied for the gate valve spindle 5.1 and moves together with it. The insulation valve gasket 1.3 is floating, being moved downwards by the gate valve spindle 5.1 and it is risen upwards by the effect of water power thrust.

The main valve gasket 5.4 leans on the gasket seat 1.2 from the upper side, and the insulation valve gasket 1.3 from the bottom side.

Direction indicator 1.4 directs water motion towards exit.

In a regular work, the gate valve spindle 5.1 rises until, by the front of a screwed part, it leans on the cover 7. In that position the water flow through a fire hydrant is the biggest.

When closing of the insulation valve 1.3, cover 7 from valve nut 6.1 is to be unscrewed, by which it is enabled that the gate valve spindle 5.1 can rise until by the non-screwed part it leans on the lower inception of the screw thread in the gate valve nut 6.1. In that position insulating valve gasket 1.3 is leant from the bottom side on the gasket support 1.2, by which it is prevented that water pours outside the entrance housing 1.1.

Cover 7 is bonded to nut 6.1 by a screw thread.

Cap assembly 8.1 ÷ 8.3 consists of: cap 8.1, wedge 8.2 and a safety screw 8.3.

On the sheathing of the biggest cylindrical part of the cap 8.1 there are four uniformly arranged longitudinal vanes 8.1.1 and a safety screw 8.3.

Activation of this Fire Hydrant is done by turning of a cap 8.1.

Acting on vanes is by hand 8.1.1, during which the twist, by wedge 8.2 is transferred from cap 8.1 to nut 6.1, which causes the longitudinal motion of the gate valve spindle 5.1.

In a regular work, a safety screw 8.3 is apart from the upper support 6.2, thus it does not block the possibility of cap turning.

By tightening of a safety screw 8.3, which can be activated only by a special (unstandard) key, pressure is made between this screw and the upper support 6.2, by which fire hydrant activation by an unauthorized person is blocked.

Control valve 9.1 ÷ 9.2 consists of: body 9.1 and ram 9.2, which are mutually coupled by a screw bond. This valve is closed when the ram 9.2 is drawn in the body 9.1 to the end.,

By taking out of ram 9.2 from the body 9.1 a hole is released 9.1.1, through which a plastic small pipe can be drawn in to the bottom of body 2.1 ÷ 2.3.

By partial turning of ram 9.2, a hole is released 9.1.2, by which the pressure in body 2.1 ÷ 2.3 comes in connection with atmospheric pressure. In case the body 2.1 ÷ 2.3 is under surpressure, water will flow out of hole 9.1.2 and it will come to relief of the body 2.1 ÷ 2.3 from surpressure.

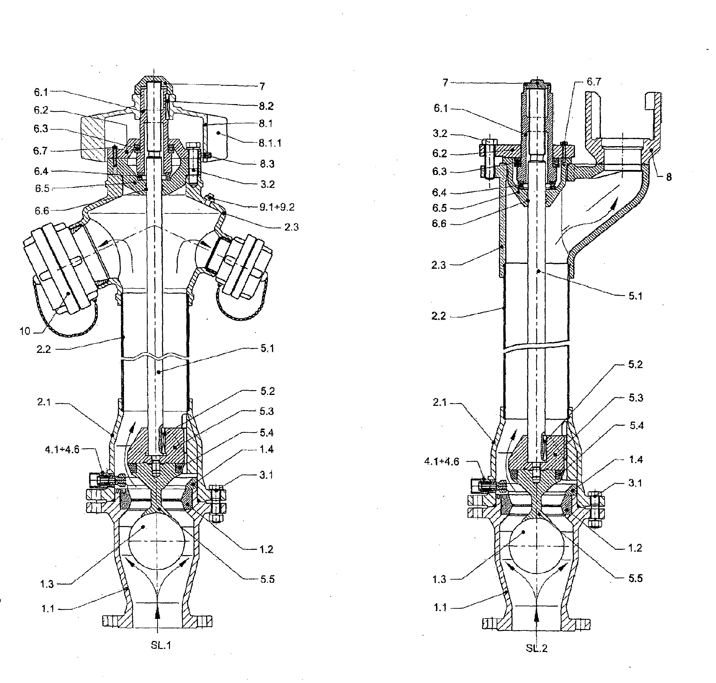

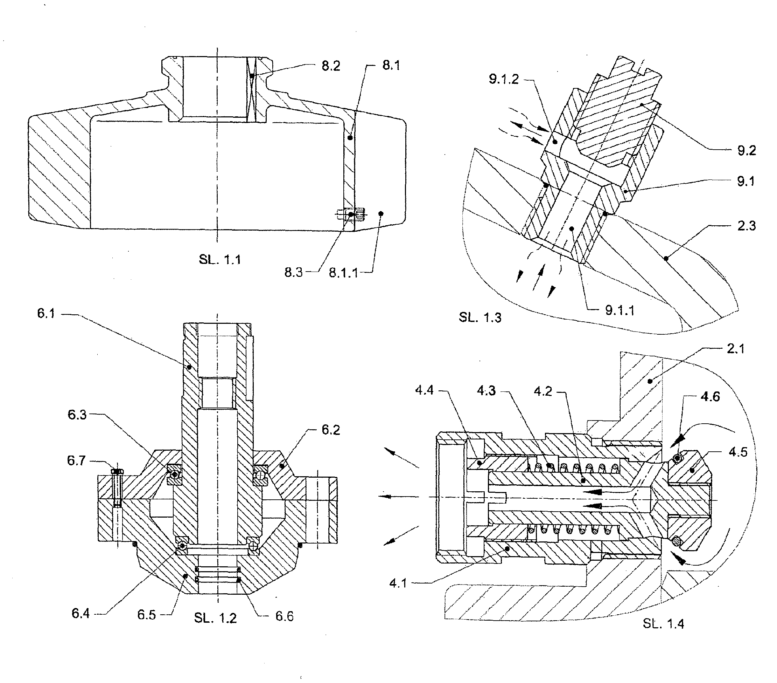

## Claims

1. Fire Hydrant from Picture 1 of this invention consists of: entrance/input assembly (1.1 ÷ 1.4), body (2.1 ÷ 2.3), joint screws (3.1 ÷ 3.2), drainage valve (4.1 ÷ 4.6), gate valve spindle assembly (5.1 ÷ 5.5), gate valve nut assembly (6.1 ÷ 6.7), cover (7), cap assembly (8.1 ÷ 8.3), control valve (9.1 ÷ 9.2) and exit joints (10),
**Characterized by** a drainage valve (4.1 ÷ 4.6), gate valve nut assembly (6.1 ÷ 6.7), cover (7), cap assembly (8.1 ÷ 8.3) and control valve (9.1 ÷ 9.2).

2. Fire Hydrant according to request 1, **characterized in that** gate valve nut assembly (6.1 ÷ 6.7) consists of: a valve nut (6.1), upper support (6.2), axial rolling bearing (6.3) and (6.4), bottom support (6.5), compression glands (6.6) and bolts (6.7) by which all these parts are bound into one separable whole.

3. Fire Hydrant according to request 2, **characterized in that** the diameter of bottom support 6.5, by which it enters into exit housing (2.3), is bigger than the biggest diameter of any part of gate valve spindle assembly (5.1 ÷ 5.5), which enables that, after taking out of gate valve nut assembly (6.1 ÷ 6.7) from the exit housing (2.3), gasket of the main valve (5.4) can be drawn out of the hydrant body (2.1 ÷ 2.3).

4. Fire Hydrant according to request 1, **characterized in that** cover (7), which is by a screw bond coupled to the gate valve nut (6.1), in a regular work, serves as a mechanical limiter till the gate valve spindle (5.1) rises when a fire hydrant is being opened, and **in that** position the water flow through the fire hydrant is biggest; while by turning of cover (7) from the gate valve nut (6.1) the gate valve spindle (5.1) is enabled to rise further to the effect of closing of the insulation valve (1.3).

5. Fire Hydrant according to request 2, **characterized in that** inception of the screw thread, from the bottom side, in the gate valve nut (6.1) is at the same time a mechanical limiter till the gate valve spindle (5.1) can rise while closing of the insulation valve (1.3).

6. Fire Hydrant according to request 2, **characterized in that** by compression glands (6.6) water is prevented to penetrate into the screw bond of the gate valve nut (6.1) and the gate valve spindle (5.1), as well as into axial bearings (6.3) and (6.4).

7. Fire Hydrant according to request 1, **characterized in that** cap assembly (8.1 ÷ 8.3) consists of a cap (8.1), a wedge (8.2) and a safety screw (8.3).

8. Fire Hydrant according to request 7, **characterized in that** on the sheathing of the biggest cylindrical part of the cap (8.1) there are four uniformly arranged longitudinal vanes (8.1.1), over which, acting by hands, the activation of a Fire Hydrant is done.

9. Fire Hydrant according to request 7, **characterized in that** by tightening of the safety screw 8.3, which can be activated only by a special key, a fire hydrant activation by an unauthorized person can be blocked.

10. Fire Hydrant according to request 1, **characterized in that** Control valve (9.1 ÷ 9.2) which is set at the top of the wet area of the exit housing (2.3) consists of: the body (9.1) and ram 9.2.

11. Fire Hydrant according to request 10, **characterized in that** after taking out of the ram (9.2) a small plastic pipe can be drawn in through the hole (9.1.1), and by it, measuring of the height of water level can be done, in the position when the hydrant is closed.

12. Fire Hydrant according to request 10, **characterized in that** in the position when the ram (9.2) is partly drawn out, then a connection is made through holes (9.1.1) and (9.1.2) between pressure inside the hydrant body (2.1 ÷ 2.3) and atmospheric pressure around.

13. Fire Hydrant according to request 1, **characterized in that** the drainage valve (4.1 ÷ 4.6) consists of the body (4.1), ram (4.2), spring (4.3), bearing (4.4), mushroom (4.5) and compression gland (4.6). In the ram (4.2) there are two radial cylindrical holes which are inclined forming an angle in relation to the longitudinal axis of ram (4.2), and which are coupled with the central cylindrical hole in the ram (4.2), through which water pours out of hydrant body (2.1 ÷ 2.3).

14. Fire Hydrant according to request 13, **characterized in that** the ram (4.2) is drawn in the body (4.1), because of the effect of water pressure on the front of the mushroom (4.6) in the moment when the water pressure in the drainage housing (2.1) reaches the value of (0.6-0.8) bars and is taken out by spring force (4.3) when the water pressure in the drainage housing (2.1) drops under (0.6-0.8) bars.

15. Fire Hydrant according to request 13, **characterized in that** in the position when the ram (4.2) is drawn in the body (4.1), the touch between the mushroom (4.6) and the body (4.1) is done over conical surfaces, and caulking is done by glands (4.6).
